# EUROPÄISCHE PATENTSCHRIFT

(11) **EP 3 463 727 B1**
(45) Veröffentlichungstag und Bekanntmachung des Hinweises auf die Patenterteilung: **15.03.2023**
(21) Anmeldenummer: 17730699.0
(22) Anmeldetag: 31.05.2017
(51) Int. Cl.: B23D 77/00

(54) **ZYLINDER, VERFAHREN ZUR ENDBEARBEITUNG EINES ZYLINDERS, HUBKOLBENSYSTEM UND VERWENDUNG EINES HUBKOLBENSYSTEMS**
CYLINDER, METHOD FOR FINISHING A CYLINDER, RECIPROCATING PISTON SYSTEM AND USE OF A RECIPROCATING PISTON SYSTEM
CYLINDRE, PROCÉDÉ DE FINISSAGE D'UN CYLINDRE, SYSTÈME À PISTON ALTERNATIF ET UTILISATION D'UN SYSTÈME À PISTON ALTERNATIF

(30) Priorität: 31.05.2016 DE 102016110007
(43) Veröffentlichungstag der Anmeldung: 10.04.2019
(73) Patentinhaber: Volkswagen Aktiengesellschaft, 38436 Wolfsburg (DE); Fraunhofer-Gesellschaft zur Förderung der angewandten Forschung e.V., 80686 München (DE)
(72) Erfinder: BORTFELDT, Marcel, 39365 Eilsleben (DE); HARBS, Ulf, 38104 Braunschweig (DE); LEHRMANN, Nils, 38102 Braunschweig (DE); SCHUBERT, Andreas, 01219 Dresden (DE); RICHTER, Daniel, 09405 Gornau (DE); SCHMIDT, Torsten, 01705 Freital (DE); SCHNEIDER, Jörg, 09116 Chemnitz (DE)
(74) Vertreter: RGTH
(86) Internationale Anmeldenummer: PCT/EP2017/063163
(87) Internationale Veröffentlichungsnummer: WO 2017/207633

(56) Entgegenhaltungen:
- EP-A1- 0 041 266
- WO-A1-2015/041215
- DE-A1- 10 320 397
- DE-A1-102009 051 262
- DE-A1-102010 035 641
- DE-A1-102014 008 922
- DE-B3- 10 308 422
- JP-A- 2011 011 293
- US-A- 5 191 864
- US-A1- 2012 121 348

## Beschreibung

Die Erfindung betrifft einen Zylinder für ein Hubkolbensystem. Weiter betrifft die Erfindung ein Verfahren zur Endbearbeitung eines Zylinders für ein Hubkolbensystem. Ferner betrifft die Erfindung ein Hubkolbensystem und eine Verwendung eines Hubkolbensystems.

Zylinderlaufflächen von Zylindern eines Hubkolbensystems werden üblicherweise durch Honen endbearbeitet. Ein Honprozess ist beispielsweise in der EP 1 321 229 A1 beschrieben.

Die DE 10 2009 051 262 A1 offenbart ein Verfahren zur Herstellung einer thermisch gespritzten Zylinderlaufbahn für Verbrennungsmotoren.

Die DE 10 2014 008 922 A1 offenbart ein Verfahren zum Behandeln einer Oberfläche eines Maschinenelements, nach dem eine Substanz auf die Oberfläche mittels eines Plasma-Spritzprozesses zumindest abschnittsweise aufgebracht wird.

Die DE 103 08 422 B3 offenbart eine Gleitfläche und Verfahren zur Herstellung einer Gleitfläche.

In der DE 10 2010 035 641 A1 wird ein Verfahren und ein Schneidwerkzeug zur Oberflächenbearbeitung sowie eine strukturierte Oberfläche beschrieben.

Die EP 0 041 266 A1 offenbart eine mit Hartstoff beschichtete Messerplatte und ein Verfahren zu deren Herstellung.

Die JP 2011 011 293 A1 beschreibt ein Verfahren und eine Vorrichtung für das Ausbilden eines inneren Durchmessers eines Werkstückes.

Die DE 10 320 397 A1 offenbart eine Gusseisenlegierung für Lamellengrauguss zur Herstellung vom Zylinderkurbelgehäusen, während die US 2012/121348 A1 ein Bohrwerkzeug zum Bohren von Zylinderbohrungen betrifft.

Der Honprozess wird abhängig vom verwendeten Material in verschiedenen Verfahrensausführungen durchgeführt. Bei Leichtmetalllegierungen (Aluminium-Silizium-Legierungen) wird beispielsweise ein Freilegungshonen oder Fluid-Freilegungshonen eingesetzt, um die Aluminium-Matrix um wenige Mikrometer zurückzusetzen, so dass ein mit der Zylinderlauffläche des Zylinders in Gleitkontakt tretender Kolbenring auf den Silizium-Partikeln der Leichtmetalllegierung gleiten kann. Bei Graugusswerkstoffen wird ein Spiralgleithonen bzw. Plateauhonen angewandt. Die beim Honen eingebrachte Struktur in Gestalt von Mikrokanälen in die Oberfläche mittels eines Werkzeugs mit geometrisch unbestimmter Schneide dient u. a. der Schmiermittelversorgung zwischen Zylinderwand und Kolbenring im Betrieb. Untersuchungen haben ergeben, dass diese Honstruktur verschleißbedingt nach einer gewissen Betriebszeit nicht mehr in der Zylinderlauffläche vorhanden ist, was zu einer Beeinträchtigung im Betrieb des Hubkolbensystems führen kann, da dann so gut wie kein Ölrückhaltevolumen mehr an der Zylinderlauffläche vorhanden ist. Die Oberflächengüte und auch die tribologischen Eigenschaften der Zylinderlauffläche sind damit stark reduziert. Zudem erfordert ein Honprozess eine komplexe Prozess- und Anlagentechnik, und der Honprozess ist zeitintensiv und erfordert eine große Menge an Kühlschmierstoff.

Der Erfindung liegt daher die Aufgabe zugrunde, einen Zylinder, ein Verfahren zur Endbearbeitung eines Zylinders sowie ein Hubkolbensystem und eine Verwendung eines Hubkolbensystems zur Verfügung zu stellen, bei welchen eine verbesserte Oberflächengüte einer Zylinderlauffläche des Zylinders erreicht werden kann bei gleichzeitiger Vereinfachung des Prozesses der Endbearbeitung der Zylinderlauffläche.

Die Lösung der Aufgabe erfolgt mit den Merkmalen der unabhängigen Ansprüche. Bevorzugte Ausgestaltungen und Weiterbildungen sind in den abhängigen Ansprüchen angegeben.

Der erfindungsgemäße Zylinder für ein Hubkolbensystem weist eine Zylinderlauffläche auf, welche durch Zerspanung, nämlich Aufbohren, mittels eines Werkzeugs mit einer oder mehreren geometrisch bestimmten Schneiden endbearbeitet ist, wobei die endbearbeitete Zylinderlauffläche eine Vielzahl von Poren und/oder Lunker aufweist und aus einem Graugusswerkstoff mit einem Poren-Flächenanteil von 2 bis 10 % ausgebildet ist.

Gemäß dem erfindungsgemäßen Verfahren zur Endbearbeitung eines Zylinders für ein Hubkolbensystem wird eine Zylinderlauffläche des Zylinders durch Zerspanung, nämlich Aufbohren, mittels eines Werkzeugs mit einer geometrisch bestimmten Schneide derart endbearbeitet, dass die Zylinderlauffläche nach der Endbearbeitung eine Vielzahl von Poren und/oder Lunker aufweist, wobei die endbearbeitete Zylinderlauffläche aus einem Graugusswerkstoff mit einem Poren-Flächenanteil von 2 bis 10 % ausgebildet ist.

Erfindungsgemäß ist es nunmehr vorgesehen, dass die Zylinderlauffläche nicht mehr durch einen Honprozess endbearbeitet wird, sondern dass die Endbearbeitung der Zylinderlauffläche nunmehr durch einen Zerspanungsprozess in Form eines Aufbohrprozesses erfolgt, welcher mittels eines Werkzeugs mit einer geometrisch bestimmten Schneide durchgeführt wird. Die durch Zerspanung, nämlich Aufbohren, endbearbeitete Zylinderlauffläche weist keine Kreuzriefenstruktur mehr auf, wie dies bei einer Endbearbeitung durch Honen der Fall wäre, sondern eine Oberfläche mit einer Vielzahl von Poren und/oder Lunkern. Untersuchungen haben gezeigt, dass eine eine Vielzahl von Poren und/oder Lunkern aufweisende Zylinderlauffläche wesentlich bessere tribologische Eigenschaften und damit auch eine höhere Oberflächengüte aufweist als eine Zylinderlauffläche mit einer Kreuzriefenstruktur. Beispielsweise können die durch die Zerspanung erzeugten Poren und/oder Lunker als Öltaschen dienen und damit ein Ölrückhaltevolumen schaffen, auf dem der Kolbenring bei der Bewegung sozusagen "aufschwimmen" kann. Ein besonders vorteilhaftes Ölrückhaltevolumen ist erreichbar bei einer endbearbeiteten Zylinderlauffläche aus einem Graugusswerkstoff mit einem Poren-Flächenanteil von 2 bis 10 %. Der Poren-Flächenanteil gibt das Verhältnis der Fläche der Poren pro Zylinderlauffläche an. Durch eine Endbearbeitung der Zylinderlauffläche mittels der Zerspanung mit bestimmter Schneide, nämlich dem Aufbohren, kann zudem der Prozess der Endbearbeitung vereinfacht werden. Zum einen ist der Aufbau der Prozess- und Anlagentechnik weniger komplex und zum anderen ist auch das Verfahren einfacher und mit kürzeren Prozesszeiten durchführbar. Mittels des Werkzeugs mit einer geometrisch bestimmten Schneide werden zwei Arbeitsschritte, nämlich eine spanende Oberflächenbearbeitung (Trennen) wie auch eine geringe Glättbearbeitung (Umformen) realisiert, die zu einer sehr hohen Oberflächengüte niedriger Rauheit der Oberfläche der Zylinderlauffläche führt. In Verbindung mit der Spanbildung kann auf die Arbeitsschritte Trennen und Umformen durch eine gezielte Gestaltung und Lage der einen oder mehreren Schneide(n) des Werkzeugs Einfluss genommen werden. Es wird eine Schneideeingesetzt, welche einen Schneidkantenradius < 10 µm aufweist und dabei eine scharfe Schneide aufweist, um einen besonders korrekten Trennschnitt zwischen der Zylinderlauffläche und dem Span erreichen zu können. Eine scharfe Schneide ist dadurch gekennzeichnet, dass bei einem korrekten Trennschnitt geringe Passivkräfte und dadurch bedingt eine geringe Umformarbeit an der Schneide resultiert. Dies führt zu einer guten, niedrigen Basisrauheit und kann bei inhomogenen Werkstoffen mit harten, spröden Phasen zum Herausreißen von Partikeln führen. Im Gegensatz dazu führt eine verrundete Schneide zu höheren Passivkräften und einer höheren Umformarbeit, wodurch die Zylinderlauffläche teilweise geglättet werden würde, Partikel in die Oberfläche eingebettet werden würden und Verschuppungen (Blechmantelbildung) durch umgelegte Rauheitsspitzen auftreten können. Im schlechtesten Fall werden Poren mit Material zugeschmiert und somit die Schmiermittelaufnahmefähigkeit der Zylinderlauffläche reduziert. Der Arbeitsschritt der Glättbearbeitung wird durch die gezielte Justierung eines geringen Einstellwinkels einer Nebenschneide am Werkzeug beeinflusst, der eine Verringerung der kinematischen Rauheit sowie das Glätten verbliebender Rauheitsspitzen durch mehrfaches Überfahren mit der Schneide ermöglicht.

Bevorzugt ist es vorgesehen, dass die aus einem Graugusswerkstoff ausgebildete, endbearbeitete Zylinderlauffläche einen Poren-Volumenanteil von 4 bis 25 ml/m² aufweist. Der Poren-Volumenanteil ist definiert als die Menge des Öls, das die Poren auf einer bestimmten Fläche aufnehmen können. Durch einen Poren-Volumenanteil von 4 bis 25 ml/m² kann ein besonders gutes Ölhaltevolumen an der aus einem Graugusswerkstoff ausgebildeten Zylinderlauffläche erreicht werden, wodurch eine an der Zylinderlauffläche auftretende Reibung reduziert werden kann, und damit der Verschleiß der Zylinderlauffläche reduziert werden kann.

Die endbearbeitete Zylinderlauffläche zeichnet sich vorzugsweise durch eine besonders glatte Oberfläche mit vielen Poren und/oder Lunkern auf der Oberfläche aus. Bevorzugt ist es daher vorgesehen, dass die endbearbeitete Zylinderlauffläche eine Rauheit mit einer Kernrautiefe Rₖ < 1,0 µm mit einer reduzierten Spitzenhöhe Rₚₖ < 0,5 µm und einer reduzierten Riefentiefe Rᵥₖ von 0,5 bis 8 µm aufweist. Besonders bevorzugt weist die endbearbeitete Zylinderlauffläche eine Rauheit mit einer Kernrautiefe Rₖ < 0,6 µm auf. Die Kernrautiefe Rₖ gibt die Tiefe des Rauheitskernprofils an. Die endbearbeitete Zylinderlauffläche weist weiter bevorzugt in Bezug auf die Rauheit eine reduzierte Spitzenhöhe Rₚₖ < 0,5 µm, besonders bevorzugt Rₚₖ < 0,3 µm auf. Ferner weist die endbearbeitete Laufflächenschicht weiter bevorzugt in Bezug auf die Rauheit eine reduzierte Riefentiefe Rᵥₖ von 0,5 µm bis 8 µm auf.

Die Zylinderlauffläche ist aus einem Graugusswerkstoff ausgebildet, wobei die aus dem Graugusswerkstoff ausgebildete Zylinderlauffläche derart endbearbeitet mittels einer scharfen Schneide ist, dass in dem Graugusswerkstoff enthaltene Hartstoffpartikel herausgerissen sind, wobei die scharfe Kante einen Schneidkantenradius < 10 µm aufweist. In dem Graugusswerkstoff bilden sich beim Gießen Hartstoffphasen, ein sogenanntes Steaditnetz bzw. Phosphiteutektikum, das sich gleichmäßig im Graugusswerkstoff verteilt. Darüber hinaus bilden sich über die Zugabe des Legierungselements Titan in dem Graugusswerkstoff sogenannte Titancarbide und Titannitride. Bei der Endbearbeitung durch Zerspanung, nämlich Aufbohren, des Graugusswerkstoffs werden die oberflächennahen Hartstoffpartikel, die Titancarbide und Titannitride, herausgerissen und bilden dadurch einen Teil der Poren und/oder Lunker an der Oberfläche der Zylinderlauffläche aus. Der restliche Teil der Poren und/oder Lunker an der Oberfläche der Zylinderlauffläche wird durch das spröde Steaditnetz bzw. Phosphiteutektikum gebildet. Bei der Zerspanung, nämlich dem Aufbohren, werden Teile des Steaditnetzes bzw. Phosphiteutektikums ausgebrochen, wenn sie sich an einer Graphitlamelle befinden. Die Graphitlamellen bilden dann eine Art Sollbruchstelle aus. Hierdurch können besonders gute tribologische Eigenschaften und damit eine hohe Oberflächengüte bei einer aus einem Graugusswerkstoff ausgebildeten Zylinderlauffläche erreicht werden.

Besonders vorteilhaft erfolgt die Endbearbeitung ohne Kühlschmierstoff. Das Verfahren kann dadurch besonders umweltfreundlich durchgeführt werden, da eine ansonsten erforderliche Kühlschmierstoffaufbereitung und auch Entsorgung des Kühlschmierstoffs entfallen kann. Ferner entfallen dadurch schädliche Öldämpfe und hautreizende Medien, so dass ein sauberes Arbeitsumfeld geschaffen werden kann. Anstelle eines Kühlschmierstoffs kann beispielsweise ein Luft-Emulsions-Gemisch oder ein Luft-Öl-Gemisch zur Kühlung eingesetzt werden.

Um eine besonders gute und saubere Zerspanung der Zylinderlauffläche erreichen zu können, weist die scharfe Schneide des Werkzeugs einen Schneidkantenradius < 10 µm auf. Durch einen Schneidkantenradius < 10 µm kann verhindert werden, dass die Schneide über die Oberfläche der Zylinderlauffläche rutscht und die Zylinderlauffläche dadurch verdichtet, anstatt sie zu zerspanen.

Um eine kostengünstige präventive Unrundbearbeitung zur Kompensation von montage- und betriebsbedingten Verzügen bei der Endbearbeitung realisieren zu können, ist es bevorzugt vorgesehen, dass das Werkzeug zusammen mit einer adaptronischen, radial auslenkbaren Spindel für eine Formbearbeitung zur Verzugskompensation eingesetzt wird. Hierdurch kann eine besonders definierte Oberfläche der Zylinderlauffläche mit sehr genauen Konturen erzeugt werden. Die adaptronische Spindel kann eine hochdynamische Auslenkung durch Piezoaktuatoren von bis zu 120 µm radial ermöglichen. In Kombination mit der Zerspanung durch die geometrisch bestimmte Schneide des Werkzeugs kann eine dreidimensionale Formbearbeitung ermöglicht werden.

Die Lösung der erfindungsgemäßen Aufgabe erfolgt ferner mittels eines Hubkolbensystems, welches einen Zylinder und einen beweglich in dem Zylinder gelagerten Kolben (ggf. mit einem integrierten Kolbenring) aufweist, wobei der Zylinder wie vorstehend beschrieben aus- und weitergebildet ist.

Erfindungsgemäß kann das wie vorstehend beschrieben aus- und weitergebildete Hubkolbensystem bei einem Verbrennungsmotor, einem Verdichter, einem Kompressor oder einer Pumpe verwendet werden. Die Verwendung des erfindungsgemäßen Hubkolbensystems ist ferner in weiteren Anlagen, Vorrichtungen, etc. denkbar.

Weitere, die Erfindung verbessernde Maßnahmen werden nachstehend anhand der Beschreibung einer bevorzugten Ausgestaltung der Erfindung anhand der Figuren näher dargestellt.

Es zeigen:
- Fig. 1: eine schematische Darstellung eines Hubkolbensystems mit einem Zylinder und einem beweglich in dem Zylinder gelagerten Kolben, wobei schematisch eine erfindungsgemäße Endbearbeitung einer Zylinderlauffläche des Zylinders dargestellt ist,
- Fig. 2: eine auf einer REM-Aufnahme basierende Darstellung einer in einem Honprozess bearbeiteten Zylinderlauffläche,
- Fig. 3: eine auf einer REM-Aufnahme basierende Darstellung einer durch Zerspanung, insbesondere Aufbohren, bearbeiteten Zylinderlauffläche gemäß der Erfindung,
- Fig. 4: eine schematische Darstellung eines Kompressors mit einem Hubkolbensystem gemäß der Erfindung, und
- Fig. 5: eine schematische Darstellung eines Verbrennungsmotors mit einem Hubkolbensystem gemäß der Erfindung

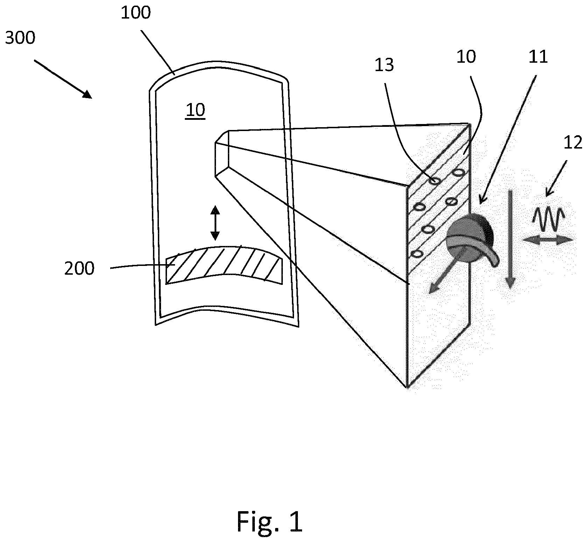

Fig. 1 zeigt ein Hubkolbensystem 300, mit einem Zylinder 100 und einem in dem Zylinder 100 beweglich gelagerten Kolben 200. Die Bewegungsrichtung des Kolbens 200 innerhalb des Zylinders 100 ist mit den Pfeilen angedeutet. Angetrieben werden kann der Kolben 200 beispielsweise mittels eines Pleuels.

Der Zylinder 100 weist eine an seiner Innenumfangsfläche ausgebildete Zylinderlauffläche 10 auf. Die Zylinderlauffläche 10 ist aus einem Graugusswerkstoff ausgebildet.

Um eine hohe Oberflächengüte mit guten tribologischen Eigenschaften zu erreichen, erfolgt eine Endbearbeitung der Zylinderlauffläche 10 durch Zerspanung mit bestimmter Schneide, insbesondere Aufbohren. Die Zerspanung erfolgt mittels eines Werkzeugs mit einer geometrisch bestimmten Schneide 11, durch das eine Vielzahl von Poren 13 und/oder Lunker in die Zylinderlauffläche 10 eingebracht werden, die ein Mikrodruckkammer-System erzeugen können, wodurch beispielsweise der Ölverbrauch des Hubkolbensystems 300 verringert werden kann.

Die Zerspanung kann den üblicherweise angewendeten Honprozess zur Endbearbeitung einer Zylinderlauffläche 10 ersetzen. Ein Honprozess, der üblicherweise ein Vorhonen, Zwischenhonen, Fluidstrahlen und Fertighonen umfasst, kann dadurch vollständig entfallen.

Zusätzlich zu dem Werkzeug mit geometrisch bestimmter Schneide 11 zur Ausführung der Zerspanung, insbesondere des Aufbohrens, kann eine adaptronische Spindel 12 verwendet werden, wodurch in Kombination mit der Schneide 11 eine optimierte Formbearbeitung zur Verzugskompensation ermöglicht werden kann, wodurch wiederum eine Honbrille entfallen kann.

Die Zerspanung in Kombination mit der adaptronischen Spindel ermöglicht eine dreidimensionale Formbearbeitung als Endbearbeitung der Zylinderlauffläche 10 zur optimierten Verzugskompensation.

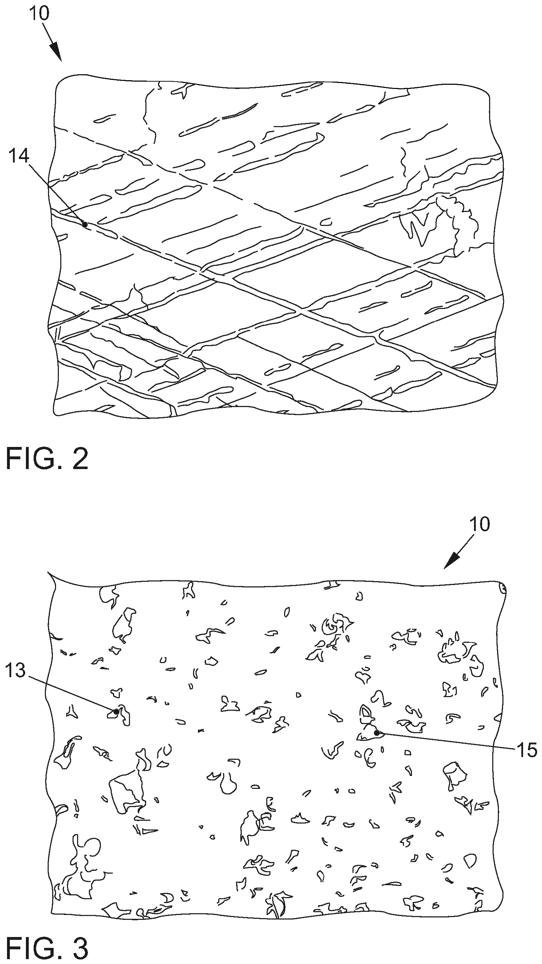

Um die Unterschiede zwischen einer durch einen Honprozess endbearbeiteten Zylinderlauffläche 10 und einer durch eine erfindungsgemäße Zerspanung, insbesondere einem Aufbohren, endbearbeiteten Zylinderlauffläche 10 zu verdeutlichen, ist in Fig. 2 eine REM-Aufnahme einer in einem Honprozess endbearbeiteten Zylinderlauffläche 10 und in Fig. 3 eine REM-Aufnahme einer mittels einer Zerspanung, insbesondere einem Aufbohren, endbearbeiteten Zylinderlauffläche 10 gezeigt.

Die in Fig. 2 gezeigte, in einem Honprozess ausgebildete Zylinderlauffläche 10 weist eine Kreuzriefenstruktur 14 auf, wobei kaum oder gar keine Poren und/oder Lunker in der Oberfläche der Zylinderlauffläche 10 ausgebildet sind.

Fig. 3 zeigt dagegen eine Zylinderlauffläche 10, welche erfindungsgemäß durch Zerspanung, insbesondere Aufbohren, mit einem Werkzeug mit einer geometrisch bestimmten Schneide 11 endbearbeitet ist. Diese Zylinderlauffläche 10 weist keine Kreuzriefenstruktur auf. Stattdessen sind auf der Zylinderlauffläche 10 eine Vielzahl von Poren 13 und/oder Lunkern 15 ausgebildet, welche ein hohes Ölrückhaltevolumen ermöglichen, da diese Poren 13 und/oder Lunker 15 muldenförmige Ausnehmungen ausbilden, in welchen sich das Öl des Hubkolbensystems 300 anstauen kann und damit an der Zylinderlauffläche 10 gehalten werden kann.

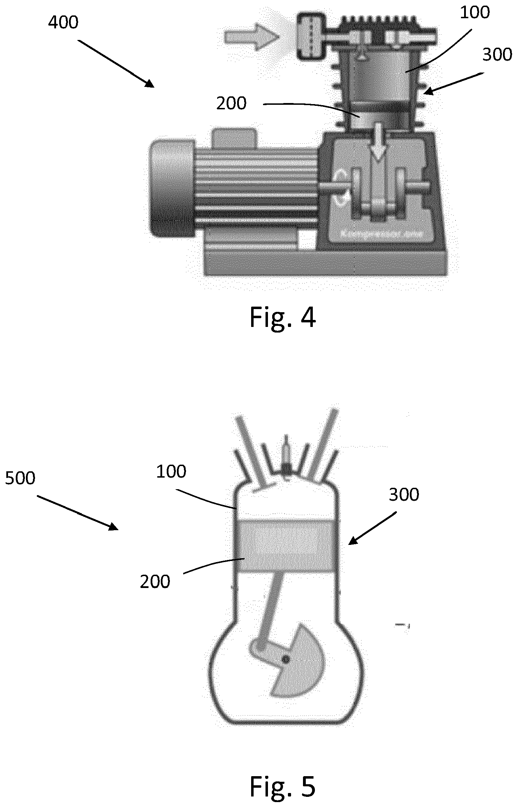

In Fig. 4 und 5 sind zwei Beispiele für eine Verwendung eines Hubkolbensystems 300 gemäß Fig. 1 gezeigt. Dabei zeigt Fig. 4 einen Kompressor 400 mit einem wie in Fig. 1 gezeigten Hubkolbensystem 300. Fig. 5 zeigt ferner einen Verbrennungsmotor 500 mit einem wie in Fig. 1 gezeigten Hubkolbensystem 300.

Die Erfindung beschränkt sich in ihrer Ausführung nicht auf die vorstehend angegebene bevorzugte Ausgestaltungen. Vielmehr ist eine Anzahl von Varianten denkbar, welche von den dargestellten Lösungen auch bei grundsätzlich anders gearteten Ausführungen Gebrauch macht. Sämtliche aus den Ansprüchen der Beschreibung oder den Zeichnungen hervorgehende Merkmale und/oder Vorteile einschließlich konstruktiven Einzelheiten räumlicher Anordnungen und Verfahrensschritte können sowohl für sich als auch in den verschiedensten Kombinationen erfindungswesentlich sein.

### Bezugszeichenliste

- 100: Zylinder
- 10: Zylinderlauffläche
- 11: Schneide
- 12: Adaptronische Spindel
- 13: Pore
- 14: Kreuzriefenstruktur
- 15: Lunker
- 200: Kolben
- 250: Kolbenring
- 300: Hubkolbensystem
- 400: Kompressor
- 500: Verbrennungsmotor

## Patentansprüche

1. Zylinder (100) für ein Hubkolbensystem (300), mit einer Zylinderlauffläche (10), welche durch Zerspanung in Form eines Aufbohrprozesses mittels eines Werkzeugs mit einer oder mehreren geometrisch bestimmten Schneiden (11) endbearbeitet ist, wobei die endbearbeitete Zylinderlauffläche (10) eine Vielzahl von Poren (13) und/oder Lunker (15) aufweist und aus einem Graugusswerkstoff mit einem Poren-Flächenanteil von 2 bis 10 % ausgebildet ist,
**dadurch gekennzeichnet, dass** die aus Graugusswerkstoff ausgebildete Zylinderlauffläche (10) derart mittels einer scharfen Schneide endbearbeitet ist, dass in dem Graugusswerkstoff enthaltene Hartstoffpartikel herausgerissen sind, wobei die scharfe Schneide einen Schneidkantenradius < 10 µm aufweist.

2. Zylinder (100) nach Anspruch 1, **dadurch gekennzeichnet, dass** die aus einem Graugusswerkstoff ausgebildete, endbearbeitete Zylinderlauffläche (10) ein Poren-Volumenanteil von 4 bis 25 ml/m² aufweist, wobei der Poren-Volumenanteil definiert ist als die Menge von Öl, die die Poren auf einer bestimmten Fläche aufnehmen können.

3. Zylinder (100) nach einem der Ansprüche 1 oder 2, **dadurch gekennzeichnet, dass** die endbearbeitete Zylinderlauffläche (10) eine Rauheit mit einer Kernrautiefe R_{K} < 1,0 µm und einer reduzierten Spitzenhöhe Rpk < 0,5 µm und einer reduzierten Riefentiefe Rvk von 0,5 bis 8 µm aufweist.

4. Verfahren zur Endbearbeitung eines Zylinders (100) für ein Hubkolbensystem (300), bei welchem eine Zylinderlauffläche (10) des Zylinders (100) durch Zerspanung in Form eines Aufbohrprozesses mittels eines Werkzeugs mit einer geometrisch bestimmten Schneide (11) derart endbearbeitet wird, dass die Zylinderlauffläche (10) nach der Endbearbeitung eine Vielzahl von Poren (13) und/oder Lunker (15) aufweist, wobei die endbearbeitete Zylinderlauffläche (10) aus einem Graugusswerkstoff mit einem Poren-Flächenanteil von 2 bis 10 % ausgebildet ist, **dadurch gekennzeichnet, dass** die aus Graugusswerkstoff ausgebildete Zylinderlauffläche (10) derart mittels einer scharfen Schneide endbearbeitet wird, dass in dem Graugusswerkstoff enthaltene Hartstoffpartikel herausgerissen werden,
wobei die scharfe Schneide einen Schneidkantenradius < 10 µm aufweist.

5. Verfahren nach Anspruch 4, **dadurch gekennzeichnet, dass** das Werkzeug zusammen mit einer adaptronischen, radial auslenkbaren Spindel (12) für eine Formbearbeitung zur Verzugskompensation eingesetzt wird.

6. Hubkolbensystem (300) mit einem Zylinder (100) und einem beweglich in dem Zylinder (100) gelagerten Kolben (200), **dadurch gekennzeichnet, dass** der Zylinder (100) nach einem der Ansprüche 1 bis 3 ausgebildet ist.

7. Verwendung eines nach Anspruch 6 ausgebildeten Hubkolbensystems bei einem Verbrennungsmotor (500), einem Verdichter, einem Kompressor (400) oder einer Pumpe.

## Claims

1. Cylinder (100) for a reciprocating piston system (300), with a cylinder bore surface (10) which is finished by machining in the form of a drilling process by means of a tool with one or more geometrically defined cutting edges (11), wherein the finished cylinder bore surface (10) has a plurality of pores (13) and/or or blowholes (15) and is formed of a gray cast iron material with a pore area fraction of 2 to 10%,
**characterized in that** the cylinder bore surface (10) formed of gray cast iron material is finished by means of a sharp cutting edge in such a way that hard material particles contained in the gray cast iron material are torn out, wherein the sharp cutting edge has a cutting edge radius< 10 µm.

2. Cylinder (100) according to claim 1, **characterized in that** the finished cylinder bore surface (10) formed of a gray cast iron material has a pore volume fraction of 4 to 25 ml/m², wherein the pore volume fraction is defined as the amount of oil that the pores can absorb on a determined area.

3. Cylinder (100) according to one of claims 1 or 2, **characterized in that** the finished cylinder bore surface (10) has a roughness with a core roughness depth R_{K} < 1.0 µm and a reduced peak height Rpk < 0.5 µm and a reduced groove depth Rvk of 0.5 to 8 µm.

4. Method for finishing a cylinder (100) for a reciprocating piston system (300), in which a cylinder bore surface (10) of the cylinder (100) is finished by machining in the form of a drilling process by means of a tool with a geometrically defined cutting edge (11) in such a way that the cylinder bore surface (10) has a plurality of pores (13) and/or blowholes (15) after finishing, wherein the finished cylinder bore surface (10) is formed of a gray cast iron material with a pore area fraction of 2 to 10%, **characterized in that** the cylinder bore surface (10) formed of gray cast iron material is finished by means of a sharp cutting edge in such a way that hard material particles contained in the gray cast iron material are torn out,
wherein the sharp cutting edge has a cutting edge radius< 10 µm.

5. Method according to claim 4, **characterized in that** the tool is used together with an adaptronic, radially deflectable spindle (12) for a form machining for distortion compensation.

6. Reciprocating piston system (300) with a cylinder (100) and a piston (200) movably mounted in the cylinder (100), **characterized in that** the cylinder (100) is formed according to one of claims 1 to 3.

7. Use of a reciprocating piston system formed according to claim 6 in an internal combustion engine (500), a supercharger, a compressor (400) or a pump.

## Revendications

1. Cylindre (100) pour un système à piston alternatif (300), comportant une surface de roulement de cylindre (10), qui est finie par usinage sous la forme d'un processus d'alésage à l'aide d'un outil avec une ou plusieurs arêtes de coupe géométriquement définies (11), dans lequel la surface finie du cylindre (10) présente un grand nombre de pores (13) et/ou de cavités (15) et est constituée d'un matériau en fonte grise avec un pourcentage de surface de pores de 2 à 10 %,
**caractérisé en ce que** la surface de roulement de cylindre (10) en matériau de fonte grise est finie au moyen d'une arête de coupe vive, de telle sorte que les particules de matériau dur contenues dans le matériau de fonte grise soient arrachées, dans lequel l'arête de coupe vive présente un rayon d'arête de coupe < 10 µm.

2. Cylindre (100) selon la revendication 1, **caractérisé en ce que** la surface de roulement finie du cylindre (10) réalisée en un matériau en fonte grise présente une fraction volumique poreuse de 4 à 25 ml/m², dans lequel la fraction volumique poreuse est définie comme la quantité d'huile que les pores peuvent retenir dans une zone donnée.

3. Cylindre (100) selon une des revendications 1 ou 2, **caractérisé en ce que** la surface de roulement finie du cylindre (10) présente une rugosité avec une rugosité à coeur R_{K} < 1,0 µm et une hauteur de pic réduite Rpk < 0,5 µm et une profondeur de rainure réduite Rvk de 0,5 à 8 µm.

4. Procédé de finition d'un cylindre (100) pour un système à piston alternatif (300), dans lequel une surface de roulement de cylindre (10) du cylindre (100) est finie par usinage sous la forme d'un processus d'alésage à l'aide d'un outil avec une arête de coupe géométriquement définie (11), de telle sorte que la surface de roulement de cylindre (10) présente un grand nombre de pores (13) après finition et/ou de cavités (15), dans lequel la surface de roulement finie du cylindre (10) est réalisée en un matériau en fonte grise avec une proportion de surface de pores de 2 à 10 %, **caractérisé en ce que** la surface de roulement de cylindre (10) en matériau de fonte grise est finie au moyen d'une arête de coupe vive, de telle sorte que les particules de matériau dur contenues dans le matériau en fonte grise soient arrachées,
dans lequel l'arête de coupe vive présente un rayon d'arête de coupe < 10 µm.

5. Procédé selon la revendication 4, **caractérisé en ce que** l'outil est utilisé avec une broche adaptronique, déviable radialement (12) pour usiner un moule afin de compenser la déformation.

6. Système à piston alternatif (300) comportant un cylindre (100) et un piston (200) monté de manière mobile dans le cylindre (100), **caractérisé en ce que** le cylindre (100) est conçu selon une quelconque des revendications 1 à 3.

7. Utilisation d'un système à piston alternatif conçu selon la revendication 6 dans un moteur à combustion interne (500), un suralimenteur, un compresseur (400) ou une pompe.
